Europäisches Patentamt

European Patent Office

Office européen des brevets

(19)

(11) Publication number: **0 049 014**

**B1**

(12) **EUROPEAN PATENT SPECIFICATION**

(45) Date of publication of patent specification: **04.06.86**

(51) Int. Cl.⁴: **F 41 H 5/04**

(21) Application number: **81201035.3**

(22) Date of filing: **16.09.81**

(54) **Improved high impact resistant nonmetallic shield.**

(30) Priority: **25.09.80 IT 2489080**
**07.07.81 IT 2278381**

(43) Date of publication of application:
**07.04.82 Bulletin 82/14**

(45) Publication of the grant of the patent:
**04.06.86 Bulletin 86/23**

(84) Designated Contracting States:
**AT BE CH DE FR GB LI NL SE**

(56) References cited:
**FR-A-1 094 399**
**FR-A-1 113 396**
**FR-A-1 163 606**
**GB-A-1 291 821**
**US-A-2 562 951**
**US-A-2 697 054**
**US-A-2 773 791**
**US-A-2 789 076**
**US-A-3 000 772**
**US-A-3 001 900**
**US-A-3 018 210**
**US-A-3 700 534**

(73) Proprietor: **LASAR S.p.A.**
**Via P. Maestri, 2**
**20129 Milan (IT)**

(72) Inventor: **Cappa, Arnaldo**
**Via Marzabotto**
**I-20059 Vimeroate - Milano (IT)**

(74) Representative: **Giambrocono, Alfonso, Dr. Ing.**
**Ing. A. Giambrocono & C. S.r.l. Via Rosolino Pilo**
**19/B**
**I-20129 Milano (IT)**

Courier Press, Leamington Spa, England.

## Description

The present invention relates to an improved high impact resistant nonmetallic shield for use, in particular, as antibullet barrier.

Lightweight, impact resistant shields to protect Air Force bomber gas tanks were, in 1941/42, the earliest mass production examples of GRP (Glass Reinforced Polyester). Lightweight shields in the form of laminate made up by a superimposed disposition of a plurality of glass fabric layers impregnated with various kinds of resinous matrix, have in several instances been proposed, as disclosed for example in FR—A—1094399 and FR—A—1113396, showing weight advantages of about 35÷45% over conventional metal alloy armors, all these shields having in common, whatever the binder, the need or ability to delaminate upon impact. The bullet energy was to be dissipated in two ways, i.e.:

a) by consecutive, linear perforation of each successive impregnated layer; and

b) by consecutive, linear delamination of each bond between successive layers.

It is well established that, to get maximum strength out of a layer of glass fabric, each fibre has to be perfectly coated with resin. To the contrary, layer delamination is enhanced by the minimum amount of resin bond between layers, said minimum being consistent with the level of integrity of the finished product.

Last decade technology opened new spaces for research in the lightweight armor field by offering new, light textile fibres (called "noble fibres") such as carbon, aramid, boron and similar, showing some mechanical properties far in excess of those of glass fibres and even of those of the best metal alloys.

Effective bullet-proof garments made by stitching together layers of plain noble fibre fabric have been developed. To increase ballistic effectiveness over that of plain fabrics, a proposal was to insert in between fabric layers and melt under pressure a thermoplastic nylon film thin enough as not to penetrate the fabrics or encapsulate the yarns, the scope of this proposal being clearly that of adding the help of layer delamination upon impact to the natural strength of the fabrics, thus increasing the amount of energy to be lost by a hitting missile to perforate a given thickness.

It was also proposed to substitute glass fibres with noble fibres, maintaining the same GRP manufacture trade procedures, both wet lay-up and pre-impregnation. Laminates so made, although giving better performance than GRP laminates, did not transfer to the finished product the enormous gap of performance existing between glass and noble fibres.

According to the present invention, in opposition to the known technology, the shield resistance to impact is improved by giving to the laminate a non-delaminating structure, i.e. a structure interconnecting the various layers of the laminate in such a manner to impart to the whole the ability to elastically absorb the impact of the bullet without delaminating.

This has been achieved by complying with the following set of rules, most of said rules being contrary either to previous proposal or to accepted lamination trade practice:

a) Adhesion or bond of matrix to yarns to be from negligible to nil;

b) The matrix must freely encapsulate the yarns neither penetrating them nor coating the fibres;

c) A portion of the matrix, evenly pre-distributed in between fabric layers, must be forced entirely through the fabric interstices resulting from the entwining of warp and weft, in such a way as to form transverse links which will bond with corresponding links extruded from matrix placed in between contiguous layers, these bonded links establishing in the shield continuous reinforcing cross chains from one to the other end of the shield;

d) The remaining portion of the matrix, not forced through the interstices, is to remain in between layers in the form of a film the sole scope of which is to interconnect and reinforce all cross-links chains at the level of each laminar plane; and

e) The elongation to break in percent of the matrix is to be at least twenty times more of that of fibres.

Under the processing aspect, (a) is obtained by proper raw material selection (matrix and fibres) or by a fibre repellent treatment; (b), (c) and (d) by controlling the matrix viscosity, the cycle temperature and pressure and by selecting the correct weight or volume ratio between yarns and matrix; and (e) by raw material selection.

The improvement of the invention is therefore to create, within the shield, a system consisting of two independent structures, i.e.:

1) an elastic honey-combed matrix structure of thermoplastic resin with the function of three-dimensional support; and

2) a textile structure made up by interwoven yarns of extra high mechanical properties, said yarns being freely contained within and encapsulated by the cavities of said honey-comb structure, with the expression "freely contained within and encapsulated by" being intended that the yarns are incorporated into and free to slide inside and along the related cavity.

The honey-comb structure has the particularity to resiliently react to the bullet impact and to withstand breakage due to the resistance offered by the yarns which, in the impact area, all together unisonous cooperate by slightly sliding inside the related cavities when the honey-combed structure is deformed by the bullet impact.

The most important feature of the invention resides in that the delamination is opposed by reinforcing continuous chains of cross links protruding from a thermoplastic matrix interposed between successive fabric layers, the protrusions passing through the interstices present in the next upper and/or lower fabric layer and resulting from the entwining of the warp and weft of said next upper and/or lower fabric layer, said continuous chains of cross links being all interconnected by a matrix film substantially flatly extending along and between a particular layer and said upper and/or lower fabric layer. The interlinking of said protrusions and film forms the honey-combed structure within the cavities of which the yarns of the fabric layers are freely contained and encapsulated.

More particularly, the honey-combed structure is obtained by interposing a thermoplastic matrix, having an elongation to break comprised between 30 and 700%, in between successive layers each consisting of a fabric of the weight comprised between 150 and 700 gr/m² made up by plain interwoving yarns of noble fibres of a tensile strength comprised between 200 and 270 Kg/mm² and by subjecting the laminate to heat and pressure so as to compel a portion of each matrix to protrude into the fabric interstices and to link the so obtained protrusions to similar protrusions resulting from the next upper and/or lower matrix, the remaining portion of a particular matrix being flatly extended in between a particular fabric layer and the next upper and/or lower fabric layer.

For a man skilled in the art, by complying with the foregoing rules and explanations, it will be easy to work the invention and this by carrying out a simple experimental program as that detailed in Table A, examples 2, 3, 4, 5 and 6.

Ballistic test procedure

Although laboratory test procedures have been proposed, when it comes to certify the indisputable merits of high impact resistant shields to be used as armors, the Applicant still prefers, as final, a fire weapon shooting test since interpretation of results of such a test are obvious even to a casual observer.

For the test it was chosen a 44 Remington Magnum, Ruger Super Blackhawk revolver, barrel length 190 mm., firing Federal stock 44 B cartridges, whose bullets of semijacketed hollow point configuration and 11.7 grams weight, travel consistently at speeds between 525 and 545 meters per second. 44 Magnum bullets are more generally sold in 15.6 grams weight, travelling at 430÷460 meters per second and, although their calculated impact energy is not much lower, their devastating effect upon armors is only a fraction of that of Federal 44 B cartridges. It can be asserted that a long barrel 44 Magnum revolver, firing Federal 44 B cartridges, is the most dangerous, perforating, short weapon combination in commerce.

Test conditions

—Firing distance      =5 meters

—Impacts            =90 degrees to sample surface

—Shooting stand      =flat plasticine

—Sample dimensions   =300×300 mm.

Example (See Table A)
Samples program

A plurality of 7 samples, one to seven in Table A, were prepared for the experiment. All these samples had in common:

— the fabrics, issued from the same cloth woven, in plain style, from aramid fibres of specific weight 1.44, tensile strength 270 Kg/mm² ASTM-2256-66 and elongation to break 4%.
The yarn were 1000 Deniers filaments warp and weft; 12×12 ends and picks per centimeter, fabric weight 260 grams/m².
— The number of fabric layers equal to 30.
— Samples 2, 3, 4, 5 and 6 had in common the matrix, polyethylene thermoplastic film, containing 4% of carbon black, to keep ultra-violet rays off fibres.

Conclusions

The 100% perforation of Sample 1 proves that 30 layers of plain fabric, as could be used in a bullet proof garment, are insufficient to meet the threat; the tremendous power of the test fire weapon, evidenced by the perforation of Sample 9, means that using metal, protection against these bullets can be guaranteed by 5 mm. of special alloy armor steel weighing some 40 Kg/m².

Sample 7, polyester matrix and Sample 8, rubber matrix, both 100% perforated, are representative of opposed established practices; their impact resistance can be assumed greater than that of plain fabrics but only a less severe test method would have made detectable improvements of relatively minor consistence. Sample 7 evidences that GRP techniques are unsuited when combined to get the most out of noble fibres of 270 Kg/mm² traction resistance and Sample 8 gives an indication that, producing a shield by bonding the noble fibre layers with a matrix which has a good adhesion to the fabrics and a minimal presence into the yarn bundles, gives an insufficient reinforcement to meet this threat.

3

Sample from 2 to 6 are representative of the program to be carried out to find out, for a given type of fabric, which is the proper weight or volume of matrix to establish the correct three-dimensional elastic honeycombed reinforcing structure, object of the invention. It can be noticed that impact performance of the shields progressively increases with matrix volume, up to a point where (Sample 4) the structure is established and the fibre/matrix ratio is correct. Beyond this point performance decreases with increase of matrix volume, firstly because of shield rigidity caused by excess interlaminar matrix (also confirmed by thickness growth) and eventually, when matrix volume excess is great, by combined shield rigidity and matrix penetrating the yarns, thus spoiling the honeycombed structure and hindering freedom of noble fibres performance upon impact.

With said set of fabrics, Sample 4 would be selected for production and the thickness of the matrix film in manufacture could vary between 0.08 and 0.1 mm. with very consistent product performance results.

Sample 4 represents a weight saving of 400% over equivalent armor steel alloy. For protection usage where weight is critical shields of this type can generally offer equivalent protection weight savings of about:

— 350÷500% over armor steel alloy,
— 200÷400% over glass fibre—resin impregnated laminates,
— 35÷100% over noble fibre—conventional laminates.

These shields also offer price advantages over noble fibre conventional laminates, because of the ability to extract more impact protection out of the same weight of noble fibres which are the most expensive raw material in the finished product.

Characteristics of this matrix were:

— shock resistance (ASTM/D 1709)=180 grams;
— tensile strength (ASTM/D 882)=180 Kg/mm$^2$;
— elongation break (ASTM/D 882)=500%.

The process cycle: 15 minutes at a pressure of 5 Kg/cm$^2$, temperature 165 degrees C, cooling in the press.

The variable of the experiment was the thickness of the 31 layers of matrix, 29 inserted between fabrics, 2 as finishing surface layers.

Sample 1 was a reference sample made by 30 fabric layers stitched together as in protection garments technique.

Sample 7 was a 30 layers laminate, wet lay-up impregnated with high quality polyester resin used in GRP armor manufacture.

Sample 8 was an armored shield purchased on the market, and made of 30 layers, rubber impregnated and vulcanized, of the same fabric described above, issued by the same weaver.

Sample 9 was a reference piece of steel armor 4 mm. thick, 32 Kg/m$^2$, Fe Mn 12÷14%, resistance to traction R=120 Kg/mm$^2$.

Microscope observations and ballistic results

— Sample 1—Plain fabrics—6 shots, 6 perforations.
— Sample 2—2.5/100 mm. of polyethylene—Observed insufficient volume of matrix to establish the reinforcing cross-link chains—6 shots, 6 perforations.
— Sample 3—5/100 mm. of polyethylene—Observed not yet sufficient volume of matrix weak reinforcing cross link chains not entirely joined and not enough laminar matrix left. 6 shots, 2 perforations.
— Sample 4—8/100 mm. of polyethylene—Observed correct matrix/yarn volume with reinforcing cross link chains perfectly established leaving a correct amount of laminar film connecting all chains. 6 shots, zero perforations.
— Sample 5—16/100 mm. of polyethylene—Observed establishment of cross link chains but excess of matrix in the laminar planes makes shield too rigid and thick. 6 shots, 3 perforations.
— Sample 6—24/100 mm. of polyethylene. Observed great excess of matrix with squeezing out of some from the edges, the shield is very rigid, thick and heavy, some excess matrix penetrates the yarns. 6 shots, 6 perforations.
— Sample 7—Polyester resin impregnated fabrics—Observed polyester penetration in the yarns coating perfectly all fibres. A very good laminate by GRP trade practice. In this case the rigid matrix (elongation 3.5%) and fibre coating produces a brittle shield of poor performance. 6 shots, 6 perforations.
— Sample 8—Rubber coated fabrics. It is observed that rubber provides same kind of adhesion between layers but no cross link chain, the matrix was not, or cannot, be forced through the fabrics. 6 shots, 6 perforations.
— Sample 9—4 mm. thick steel alloy. 2 shots, 1 perforation.

# 0 049 014

TABLE A

| Samples N. | Matrix | | | Shield | | Shots fired N. | Perfora-tions N. |
|---|---|---|---|---|---|---|---|
| | Thickness mm. | Weight in % | Type | Thickness mm. | Weight Kg/m² | | |
| 1 | —— | —— | —— | —— | 7.8 | 6 | 6 |
| 2 | 0.025 | 8 | Polyethylene | 8.4 | 8.5 | 6 | 6 |
| 3 | 0.050 | 16 | Polyethylene | 8.4 | 9.3 | 6 | 2 |
| 4 | 0.080 | 22 | Polyethylene | 8.7 | 10.0 | 6 | 0 |
| 5 | 0.160 | 36 | Polyethylene | 10.8 | 12.4 | 6 | 3 |
| 6 | 0.240 | 47 | Polyethylene | 12.6 | 14.6 | 6 | 6 . |
| 7 | —— | 27 | Polyester | 9.3 | 10.7 | 6 | 6 |
| 8 | —— | 15 | Rubber | 9.0 | 9.1 | 6 | 6 |
| 9 | —— | —— | —— | Steel 4.0 | 32.0 | 2 | 1 |

## Claims

1. Improved high impact resistance non-metallic shield of the type made up by alternate superimposition of thermoplastic resin layers and textile fabric layers and comprising a structural support obtained by heat and pressure treatment of said thermoplastic resin, the textile fabric layers being each made up by interwoven extra high strength synthetic fibre yarns characterised in that the structural support comprises cross links protruding from each thermoplastic resin layer interposed between successive fabric layers, the protrusions passing through the interstices resulting from the entwining of warp and weft present in the next upper and/or lower fabric layer, said protrusions linking and bonding to similar protrusions of the next upper and/or lower thermoplastic resin layer, the interlinking of said protrusions and said layers forming said structural support, the cavities of which freely receive and encapsulate the yarns of the fabric layers.

2. Improved high impact resistance non-metallic shield, according to claim 1, characterised in that the thermoplastic resin layer elongation to break is comprised between 30 and 700%.

3. Improved high impact resistance non-metallic shield, according to claim 1, characterised in that the synthetic fibre yarns have a tensile strength comprised between 200 and 270 Kg/mm².

4. Improved high impact resistance non-metallic shield, according to claim 1, characterised in that the textile fabric is of a weight comprised between 150 and 700 gr/m².

5. Improved high impact resistance non-metallic shield, according to claim 1, characterised in that said textile layers are made by plain style woven cloth.

## Patentansprüche

1. Verbesserter hoch schlagbeständiger nichtmetallischer Schutzschild von der Art wie hergestellt durch abwechselnde Übereinanderlagerung von Lagen aus thermoplastischem Harz und Lagen aus Textilgewebe, und umfassend einen Strukturträger, erzielt durch Hitze- und Druckbehandlung des thermoplastischen Harzes, wobei die Lagen aus Textilgewebe je aufgebaut sind durch miteinander verwebte extrahochfeste Garne aus synthetischen Fasern, dadurch gekennzeichnet, daß der Strukturträger Vernetzungen umfaßt, die aus jeder Lage aus thermoplastischem Harz vorspringen, welche zwischen aufeinanderfolgende Gewebelagen eingelegt ist, wobei die Vorsprünge durch die aus dem Verwinden von Kette und Schuß resultierenden Zwischenräumen hindurchgehen, welche in der nächsten oberen und/oder unteren Gewebelage vorliegen, wobei die Vorsprünge sich vernetzen und binden an ähnliche Vorsprünge der nächsten oberen und/oder unteren Lage aus synthetischem Harz, wobei die Verkettungen der Vorsprünge und der Lagen den Strukturträger bilden, und daß die Hohlräume derselben die Garne der Gewebelagen frei aufnehmen und einkapseln.

2. Verbesserter hoch schlagbeständiger nichtmetallischer Schutzschild nach Anspruch 1, dadurch gekennzeichnet, daß die Bruchdehnung der Lage aus thermoplastischem Harz zwischen 30 und 700% liegt.

3. Verbesserter hoch schlagbeständiger nichtmetallischer Schutzschild nach Anspruch 1, dadurch

5

gekennzeichnet, daß die Garne aus synthetischer Faser eine Zugfestigkeit zwischen 200 und 270 kg/mm² aufweisen.

4. Verbesserter hoch schlagbeständiger nichtmetallischer Schutzschild nach Anspruch 1, dadurch gekennzeichnet, daß das Textilgewebe ein Gewicht zwischen 150 und 700 g/m² umfaßt.

5. Verbesserter hoch schlagbeständiger nichmetallischer Schutzschild nach Anspruch 1, dadurch gekennzeichnet, daß die Textillagen aus glattgewebtem Stoff hergestellt sind.

**Revendications**

1. Plaque de cuirasse non métallique perfectionnée à haute résistance aux impacts, du type fabriqué par superposition de couches alternées et successives de résine thermoplastique et de textile et comprenant un support structurel obtenu par traitement thermique et sous pression de ladite résine thermoplastique, les couches en tissu étant fabriquées par tissage de fils de fibres synthétiques ayant une très grande résistance, caractérisée en ce que le support structurel comprend des liaisons transversales faisant saillie à partir de chaque couche en résine thermoplastique interposée entre des couches successives de tissu, les saillies passant à travers les interstices résultant de l'entrelacement des fils de trame et de chaîne de la couche de tissu immédiatement supérieure et/ou inférieure, lesdites saillies étant reliées à et interconnectées avec des saillies similaires de la couche en résine thermoplastique immédiatement supérieure et/ou inférieure, l'interconnexion desdites saillies et lesdites couches formant ledit support structurel, dont les cavités accueillent et entourent librement les fils des couches en tissus.

2. Plaque de cuirasse non métallique perfectionnée à haute résistance selon la revendication 1, caractérisée en ce que la couche en résine thermoplastique peut être soumise à une élongation avant rupture comprise entre 30 et 700%.

3. Plaque de cuirasse non métallique perfectionnée à haute résistance selon la revendication 1, caractérisée en ce que les fils en fibres synthétiques possèdent une résistance à la traction comprise entre 200 et 270 kg/mm².

4. Plaque de cuirasse non métallique perfectionnée à haute résistance selon la revendication 1, caractérisée en ce que le tissu en textile possède un poids compris entre 150 et 700 g/m².

5. Plaque de cuirasse non métallique perfectionnée à haute résistance selon la revendication 1, caractérisée en ce que lesdites couches en textile sont fabriquées en tissu uni.